# EUROPÄISCHE PATENTSCHRIFT

(11) **EP 1 785 806 B1**
(45) Veröffentlichungstag und Bekanntmachung des Hinweises auf die Patenterteilung: **21.07.2010**
(21) Anmeldenummer: 06018521.2
(22) Anmeldetag: 05.09.2006
(51) Int. Cl.: G06F 1/18

(54) **Computergehäuse**
Computer cabinet
Boîtier d'ordinateur

(30) Priorität: 25.10.2005 DE 202005016711 U
(43) Veröffentlichungstag der Anmeldung: 16.05.2007
(73) Patentinhaber: Medion AG, 45127 Essen (DE)
(72) Erfinder: Reineke, Andreas, 33100 Paderborn (DE)
(74) Vertreter: Schweiger, Johannes

(56) Entgegenhaltungen:
- EP-A2- 0 427 172
- DE-U1- 20 014 578
- US-A- 5 363 273
- US-A1- 2004 174 672
- US-B1- 6 233 147

## Beschreibung

Die Erfindung betrifft ein Computergehäuse mit einer Andockstation für Laufwerke, mit einem Datenanschluss und einem Stromversorgungsanschluss.

Es sind Computergehäuse bekannt, die eine interne Aufnahmeeinrichtung für Laufwerke aufweisen, wie beispielsweise die US 6,233,147. Diese Andockstationen sind innerhalb des Gehäuses angeordnet, wobei die Wechselfestplattenlaufwerke in einen sogenannten Slot in das Gehäuse eingeschoben werden. An der Rückwand des Slots ist ein Stromversorgungsanschluss und ein Datenanschluss vorgesehen. In der Regel ist der Datenanschluss als IDE Anschluss ausgebildet. Nachteilig bei den bekannten Andockstationen ist es, dass die Wechselfestplatten in speziellen Gehäusen angeordnet sein müssen, die innerhalb des Slots geführt werden. Die Außenabmessungen dieser Gehäuse müssen exakt auf die Innenabmessungen des Slots abgestimmt sein. Der Einsatz von beliebigen Wechselfestplatten, selbst mit auf die Anschlüsse im Computergehäuse abgestimmten Anschlüssen ist jedoch nicht möglich, da die Abmessungen der Festplattengehäuse in der Regel nicht mit den Abmessungen des Slots übereinstimmen. Ein weiterer Nachteil der bekannten Computergehäuse ist in dem umständlichen Wechselvorgang zu sehen. Beim Einsteckvorgang sowie bei der Entnahme der Festplatten verkanten diese häufig in den Slots.

Der Erfindung liegt die Aufgabe zugrunde, ein verbessertes Computergehäuse mit einer gut zugänglichen Andockstation vorzuschlagen, in die Laufwerke mit unterschiedlichen Abmessungen einsetzbar sind.

Diese Aufgabe wird mit den Merkmalen des Anspruchs 1 gelöst. Vorteilhafte Ausgestaltungen der Erfindung sind in den Unteransprüchen angegeben.

Der Erfindung liegt der Gedanke zugrunde, die Andockstation auf der Computergehäuseoberseite und nicht im Innern des Computergehäuses anzuordnen. Hierdurch ist die Andockstation leicht zugänglich. Da die an die Andockstation anzuschließenden Laufwerke nicht durch einen Slot in der Computergehäusefront eingeschoben werden müssen, können nahezu beliebig ausgeformte Laufwerke angeschlossen werden. Lediglich die Anordnung der Anschlüsse an dem Laufwerk muss mit der Anordnung der Anschlüsse an der Andockstation übereinstimmen. Gegebenenfalls ist es auch denkbar, zwischen dem anzudockenden Laufwerk und der Andockstation einen Adapter vorzusehen.

Das erfindungsgemäße Computergehäuse eignet sich insbesondere zum Anschluss von externen Festplatten. Für solche externen Festplatten, die an jedem beliebigen Computer betrieben werden können, war es bisher notwendig, ein Datenverbindungskabel zum einen mit der externen Festplatte und zum anderen mit dem Computergehäuse zu verbinden. Ferner war es notwendig, die externe Festplatte separat mit Strom zu versorgen. Solche Versorgungskabel stellten häufig eine Stolperfalle mit teils fatalen Folgen für die empfindlichen Festplatten dar. Mittels des erfindungsgemäßen Computergehäuses mit Andockstation ist es erstmals möglich, auch externen Festplatten durch einfaches Aufschieben auf die entsprechenden Anschlüsse der Andockstation an den Computer anzuschließen. Das aufwändige Anschließen mittels Kabeln entfällt. Da die Andockstation oben auf dem Computergehäuse angeordnet ist, gibt es auch keinerlei Zugangsprobleme.

In Ausgestaltung der Erfindung ist mit Vorteil vorgesehen, dass die Andockstation oben offen ausgebildet ist, einen Boden und eine Umfangswand aufweist. Durch diese wannenförmige Ausbildung werden die anzuschließenden Laufwerke seitlich durch eine Umfangswand geschützt. Ein Herunterstürzen von dem Computergehäuse wird mit Vorteil vermieden. Ein sicherer Halt innerhalb der Andockstation wird durch ein Aufliegen des Laufwerks auf dem Wannenboden unterstützt. Mit Vorteil sind die Abmessungen der Andockstation derart gewählt, dass eine Vielzahl unterschiedlicher Laufwerkmodelle angeschlossen werden kann. An dieser Stelle sei ausdrücklich erwähnt, dass die erfindungsgemäße Andockstation nicht auf den Anschluss von Festplatten beschränkt ist. Grundsätzlich eignet sich die Erfindung zum Anschluss aller möglichen Laufwerke, beispielsweise von externen DVD-Spielern, Karten-Lesegeräten, etc.. Die oben offene Ausgestaltung hat den Vorteil, dass die Abluft von etwaigen Lüftern der Laufwerke nicht in das Computergehäuse, sondern unmittelbar in die Umgebung abgegeben werden kann.

In Weiterbildung der Erfindung ist mit Vorteil vorgesehen, dass die wannenförmige Andockstation in die Gehäuseoberseite bzw. in eine obere Gehäusewand eingelassen ist. Hierbei handelt es sich um eine besonders Platz sparende Variante der Erfindung. Die Oberkante der Umfangswand schließt mit Vorteil plan eben mit der Gehäuseoberseite ab. Mit Vorteil ist die Höhe der Umfangswand derart bemessen, dass das auf dem Wannenboden aufliegende Laufwerk die Umfangswand überragt. Hierdurch kann das Laufwerk besser gegriffen werden.

Da die meisten Laufwerke eine rechteckige Grundfläche aufweisen ist es von Vorteil, wenn auch die Umfangswand der Andockstation eine zumindest näherungsweise rechteckige Kontur mit einer Rückwand, einer Vorderwand und zwei parallelen Seitenwänden aufweist. Hierdurch wird ein optimaler Halt der Laufwerke innerhalb der Andockstation sichergestellt.

Um das Einführen von Laufwerken in die Andockstation zu erleichtern, kann in Ausgestaltung der Erfindung vorgesehen sein, dass mindestens eine Wand, vorzugsweise die Vorderwand, als Einlaufschräge für das Laufwerk ausgebildet ist.

Es ist von Vorteil, wenn der Datenanschluss und der Stromanschluss an der Umfangswand, vorzugsweise an der Rückwand angeordnet sind. Das anzudockende Laufwerk kann dann in einer Bewegung von vorne nach hinten auf die Anschlüsse der Andockstation aufgeschoben werden. Die Zugänglichkeit des Computergehäuses ist in der Regel von vorne am besten.

Gemäß einer Variante der Erfindung ist vorgesehen dass ein von dem Datenanschluss getrennter Stromversorgungsanschluss vorgesehen ist, und dass die beiden Anschlüsse vorzugsweise nebeneinander angeordnet sind. Diese Konfiguration eignet sich zum Anschluss der meisten externen Festplatten. Für diese ist aufgrund der relativ hohen Leistungsaufnahme ein separater Stromanschluss notwendig.

Für andere Laufwerke wiederum, insbesondere von Laufwerken mit geringer Leistungsaufnahme wie beispielsweise externen Kartenlesegeräten, ist es möglich, einen gemeinsamen Daten- und Stromversorgungsanschluss, vorzugsweise ein USB-Anschluss, vorzusehen. Es ist auch denkbar, mehrere separate und/oder gemeinsame Anschlüsse in die Andockstation zu integrieren.

Um die Kompatibilität zu verbessern ist es zweckmäßig, als Datenanschluss und als Stromversorgungsanschluss genormte Standardanschlüsse zu verwenden. Insbesondere kommen USB-Anschlüsse oder Fire-Wire-Anschlüsse in Betracht.

Es ist von Vorteil, als Stromversorgungsanschluss einen Niederspannunganschluss vorzusehen. Dieser ist mit Vorteil mit dem Netzgerät des Computergehäuses verbunden. Auf ein separates Netzgerät (Transformator) kann mit Vorteil verzichtet werden.

Gemäß der Erfindung ist vorgesehen, dass die Abmessungen der Andockstation derart gewählt sind, dass ein anzudockendes Laufwerk aus vertikaler Richtung von oben in die Andockstation einsetzbar, insbesondere auf den Wannenboden aufsetzbar, und dann, vorzugsweise horizontal, in Richtung Datenanschluss und Stromversorgungsanschluss verschiebbar ist. Wenn die Anschlüsse an der Rückwand angeordnet sind, müssen die Seitenwände länger sein als das einzusetzende Laufwerk, damit ein vertikales Aufsetzen des Laufwerks auf den Wannenboden und ein anschließendes horizontales Verschieben desselben in Richtung Rückwand möglich ist. Falls das Laufwerk an den Seitenwänden anliegt, kann die Abluft eines eventuell vorhandenen Lüfters des Laufwerks in den freien Bereich vor dem Laufwerk innerhalb der wannenförmigen Andockstation abgegeben werden.

Neben der Anordnung der Anschlüsse in der Rückwand ist auch eine Anordnung der Anschlüsse im Wannenboden denkbar.

Um das Laufwerk bei der eigentlichen Andockbewegung zu führen und damit eine Beschädigung der Anschlüsse durch schräges andocken zu vermeiden, ist erfindungsgemäß vorgesehen, dass im Wannenboden mindestens eine in Richtung Datenanschluss und Stromversorgungsanschluss verlaufende Führungsrille für das anzudockende Laufwerk eingebracht ist. Die Führungsrillen können in Ausgestaltung der Erfindung auch als Zuluft- oder Abluftkanäle für Lüfter des Laufwerks vorgesehen sind.

Zur weiteren Verbesserung des Andockvorgangs weist die Andockstation, vorzugsweise an der Umfangswand, Zentrierungsmittel zum exakten Andocken des Laufwerks an den Anschlüssen auf. Dabei können die Zentrierungsmittel beispielsweise als sich in Richtung der Anschlüsse annähernde Schrägen in oder an der Umfangswand der Andockstation ausgebildet sein.

Es ist von Vorteil, wenn die Andockstation Fixiermittel, insbesondere Rastmittel, zur vorzugsweise lösbaren Fixierung des Laufwerks aufweist. Hierdurch kann ein unbeabsichtigtes Lösen des Laufwerks von den Anschüssen im Betrieb vermieden werden.

Damit die Anschlüsse von unterschiedlich breiten Laufwerken mit den Anschlüssen der Andockstation zur Deckung kommen ist es von Vorteil dass mindestens ein Zentrierungseinsatz zur Verschmälerung der Andockstation vorgesehen ist. Dabei können unterschiedlich breite Zentrierungseinsätze als Adapter für die verschiedenen Laufwerke vorgesehen werden.

Weitere Vorteile und zweckmäßige Ausführungen der Erfindung sind in den weiteren Ansprüchen, der Figurenbeschreibung und den Zeichnungen zu entnehmen.

Dabei zeigen:
- Fig. 1:: eine perspektivische Ansicht eines Computergehäuses mit einer wannenförmigen Andockstation und
- Fig. 2:: das Computergehäuse gemäß Fig. 1 mit angedockter externer Festplatte.
- Fig. 3:: eine perspektivische Ansicht der Andockstation in Alleinstellung.

In den Figuren sind gleiche Bauteile und Bauteile mit gleicher Funktion mit den gleichen Bezugszeichen gekennzeichnet.

In den Figuren ist das Computergehäuse mit dem Bezugszeichen 1 gekennzeichnet. Das Computergehäuse 1 ist quaderförmig ausgebildet. In der perspektivischen Darstellung ist eine Gehäusefrontseite 2, eine Gehäuseseitenfläche 3 und eine von einer oberen Gehäusewand 4 gebildeten Gehäuseoberseite dargestellt.

In die obere Gehäusewand 4 ist eine wannenförmige, oben offene Andockstation 5 eingelassen. Die Andockstation 5 weist einen ebenen, horizontal verlaufenden Wannenboden 6 sowie eine geschlossene Umfangswand 7 auf. Die Kontur der Umfangswand 7 und des Wannenbodens 6 ist rechteckig. Die Umfangswand 7 besteht aus einer Rückwand 8, einer Vorderwand 9 sowie zwei im rechten Winkel dazu verlaufenden, parallelen, die Rückwand 8 und die Vorderwand 9 miteinander verbindenden Seitenwänden 10, 11. Die Umfangswand 7 schließt auf der Oberseite eben mit der oberen Gehäusewand 4 ab.

Aus der Rückwand 8 der Andockstation 5 ragt ein als USB-Anschluss ausgebildeter Datenanschluss 12 und ein als Niederspannungsanschluss ausgebildeter Stromversorgungsanschluss 13 heraus. Beide Anschlüsse 12, 13 sind nebeneinander angeordnet. Anstelle von zwei getrennten Anschlüssen 12, 13 kann auch ein gemeinsamer Daten-/Stromanschluss vorgesehen werden.

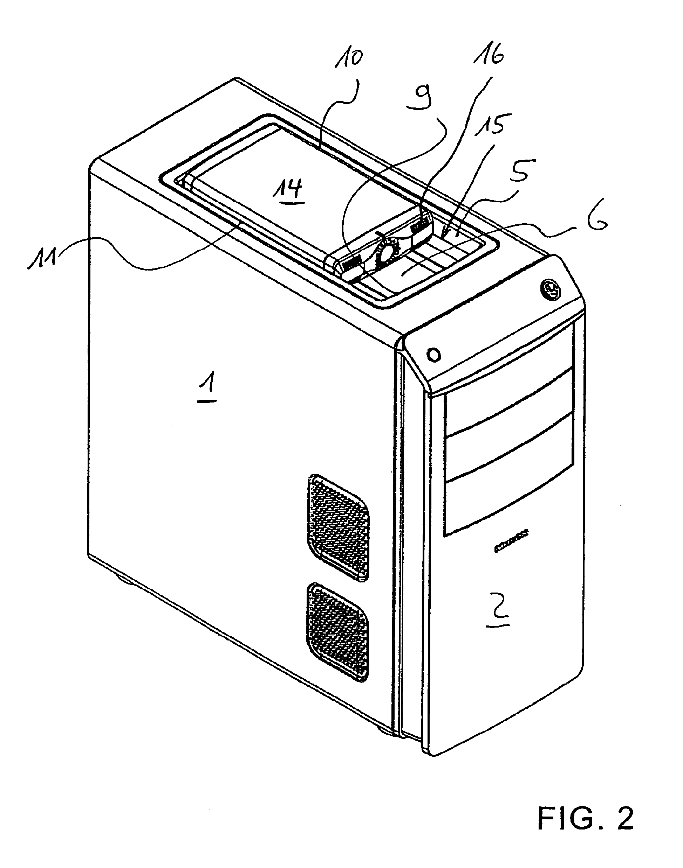

In Fig. 2 ist ein externes Festplattenlaufwerk 14 an die Anschlüsse 12, 13 der Andockstation 5 angedockt. Dazu wurde das Festplattenlaufwerk 14 von oben auf den Wannenboden 6, vor die Anschlüsse 12, 13 aufgesetzt und dann nach hinten, horizontal in Richtung Rückwand 8 und damit in Richtung der Anschlüsse 12, 13 verschoben. Das Festplattenlaufwerk 14 weist auf dessen Rückseite zu den Anschlüssen 12, 13 der Andockstation 5 formkomplementäre, in den Figuren nicht zu erkennende Anschlüsse auf.

In dem gezeigten Ausführungsbeispiel entspricht die Breite des Festplattenlaufwerks 14 dem Abstand der Seitenwände der 10, 11 der Andockstation 5. Daher ist ein sicherer Halt gegeben. Sollen schmalere Laufwerke angedockt werden, können nicht dargestellte Einsteckzentrierungen zur Verschmälerung der Andockstation 5 vorgesehen werden. Dies ist aber nicht zwingend notwendig, da alleine die Kopplung der Anschlüsse einen gewissen Halt gewährleistet.

In Fig. 2 ist zu erkennen, dass die Seitenwände 10, 11 länger sind als das Festplattenlaufwerk 14. Hierdurch ist ein Einsetzen von oben mit darauf folgendem horizontalen Verschieben überhaupt erst möglich. Der Raum 15 zwischen der Vorderwand 9 und dem Festplattenlaufwerk 14 dient zum Abströmen von Ablauft von Lüftern 16 des Festplattenlaufwerks 14.

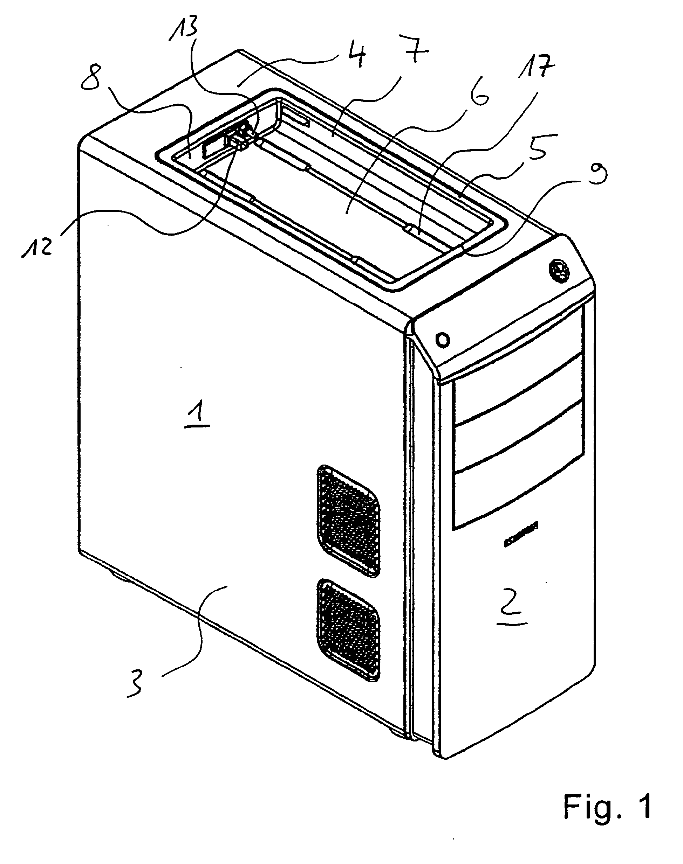

Wie aus Fig. 1 ersichtlich ist, weist die Andockstation 5 im Wannenboden 6 parallele, in Richtung Rückwand verlaufende Führungsrillen 17 auf. Es ist denkbar, dass das Festplattenlaufwerk 14 hierin mittels nach unten weisender Fortsätze geführt ist. Die Führungsrillen 17 dienen auch als Abluftkanäle für Ablauft von Lüftern des Laufwerks 14.

Ferner ist aus Fig. 1 ersichtlich, dass seitliche Führungen 18 in den Seitenwänden 10, 11, unmittelbar benachbart zur Rückwand 8 für eine geführte Verschiebebewegung des Festplattenlaufwerks 14 zu den Anschlüssen 12, 13 hin vorgesehen sind.

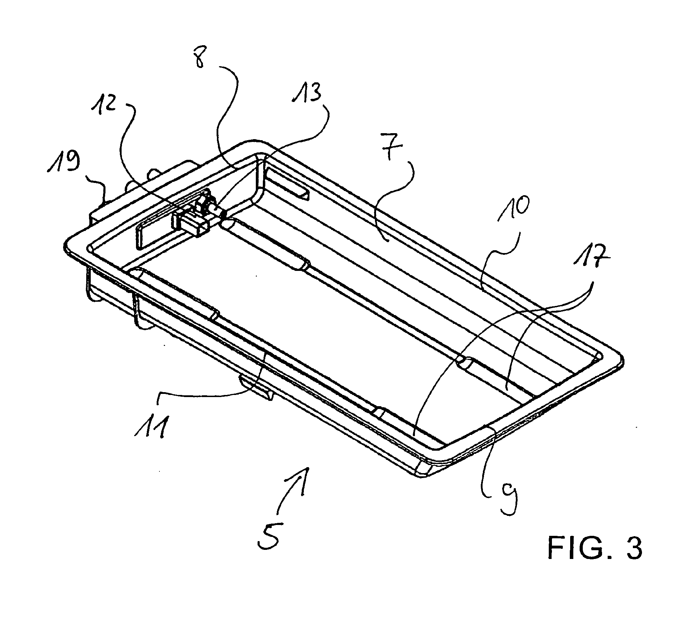

In Fig. 3 ist die Andockstation 5 in Alleinstellung dargestellt. Zu erkennen ist der Datenanschluss 12 und der Stromversorgungsanschluss 13 zum Anschluss eines Laufwerks 14. Auf der Außenseite der Rückwand 8 der wannenförmigen Andockstation sind Anschlusskontakte zum Anschluss des Datenanschlusses 12 und des Stromversorgungsanschlusses 13 am Computer bzw. an einem Netzteil des Computers vorgesehen. Zusätzlich ist ein Erdungsanschluss 19 zum Erden der Andockstation 5 auf der Außenseite der Rückwand 8 vorgesehen.

Weiterhin ist in Fig. 3 zu erkennen, dass sich die Führungsrillen 17 im vorderen und im hinteren Bereich des Wannenbodens 6 verbreitern. Diese verbreiterten Stellen dienen zur Aufnahme von Standflüssen, insbesondere aus Gummi, des anzudockenden Laufwerk 14, wobei die eigentliche Führungsfunktion von dem schmalen, mittleren Abschnitt der Führungsrillen 17 übernommen wird.

### Computergehäuse

### Bezugszeichenliste

- 1: Computergehäuse
- 2: Gehäusefrontseite
- 3: Gehäuseseitenfläche
- 4: obere Gehäusewand
- 5: Andockstation
- 6: Wannenboden
- 7: Umfangswand
- 8: Rückwand
- 9: Vorderwand
- 10: Seitenwand
- 11: Seitenwand
- 12: Datenanschluss
- 13: Stromversorgungsanschluss
- 14: Laufwerk
- 15: Raum
- 16: Lüfter
- 17: Führungsrillen
- 18: Führungen
- 19: Erdungsanschluss

## Patentansprüche

1. Computergehäuse mit einer Andockstation (5) für Laufwerke (14), mit einem Datenanschluss (12) und einem Stromversorgungsanschluss (13), wobei
die Andockstation (5) wannenfömig mit einem Wannenboden (6) und einer Umfangswand (7) oben offen ausgebildet und auf der Computergehäuseoberseite angeordnet ist, und wobei die Abmessungen der Andockstation (5) derart gewählt sind, dass ein anzudockendes Laufwerk (14) aus vertikaler Richtung von oben in die Andockstation (5) einsetzbar, insbesondere auf den Wannenboden (6) aufsetzbar, und danach horizontal in Richtung Datenanschluss (12) und Stromversorgungsanschluss (13) verschiebbar ist,
**dadurch gekennzeichnet,**
**dass** im Wannenboden (6) mindestens eine in Richtung Datenanschluss (12) und Stromversorgungsanschluss (13) verlaufende Führungsrille (17) für das anzudockende Laufwerk (14) vorgesehen ist.

2. Computergehäuse nach Anspruch 1,
**dadurch gekennzeichnet,**
**dass** die Andockstation (5) wannenfömig mit einem Wannenboden (6) und einer, vorzugsweise umfänglich geschlossenen, Umfangswand (7) ausgebildet ist.

3. Computergehäuse nach Anspruch 2,
**dadurch gekennzeichnet,**
**dass** die wannenförmige Andockstation (5) in eine obere Gehäusewand (4) eingelassen ist.

4. Computergehäuse nach einem der Ansprüche 2 oder 3,
**dadurch gekennzeichnet,**
**dass** die Umfangswand (7) der Andockstation (5) eine, zumindest näherungsweise rechteckige Kontur mit einer Rückwand (8), einer Vorderwand (9) und zwei parallelen Seitenwänden (10, 11) aufweist.

5. Computergehäuse nach Anspruch 4,
**dadurch gekennzeichnet,**
**dass** mindestens ein Wandabschnitt (8, 9, 10, 11) der Umfangswand, vorzugsweise die Vorderwand (9), als in Richtung Wannenboden abfallende Einlaufschräge für das Laufwerk (14) ausgebildet ist.

6. Computergehäuse nach einem der Ansprüche 2 bis 5,
**dadurch gekennzeichnet,**
**dass** der Datenanschluss (12) und der Stromversorgungsanschluss (13) an der Umfangswand (7), vorzugsweise an der Rückwand (8), angeordnet sind.

7. Computergehäuse nach einem der vorhergehenden Ansprüche,
**dadurch gekennzeichnet,**
**dass** ein von dem Datenanschluss (12) räumlich getrennter Stromversorgungsanschluss (13) vorgesehen ist, und dass vorzugsweise die beiden Anschlüsse (12, 13) nebeneinander angeordnet sind.

8. Computergehäuse nach einem der Ansprüche 1 bis 6,
**dadurch gekennzeichnet,**
**dass** ein gemeinsamer Daten- und Stromversorgungsanschluss, vorzugsweise ein USB-Anschluss, vorgesehen ist.

9. Computergehäuse nach einem der Ansprüche 1 bis 8,
**dadurch gekennzeichnet,**
**dass** als Datenanschluss (12) und als Stromversorgungsanschluss (13) genormte Standardanschlüsse vorgesehen sind.

10. Computergehäuse nach einem der vorhergehenden Ansprüche,
**dadurch gekennzeichnet,**
**dass** als Datenanschluss (12) ein USB-Anschluss vorgesehen ist.

11. Computergehäuse nach einem der vorhergehenden Ansprüche,
**dadurch gekennzeichnet,**
**dass** als Stromversorgungsanschluss (13) ein Niederspannungsanschluss vorgesehen ist.

12. Computergehäuse nach einem der vorherigen Ansprüche,
**dadurch gekennzeichnet,**
**dass** die Andockstation (5), vorzugsweise an der Umfangswand (7), Zentrierungsmittel (18) für das Laufwerk (14) aufweist.

13. Computergehäuse nach einem der vorhergehenenden Ansprüche,
**dadurch gekennzeichnet,**
**dass** die Andockstation (5) Fixiermittel, insbesondere Rastmittel, zur vorzugsweise lösbaren Fixierung des Laufwerks (14) aufweist.

14. Computergehäuse nach einem der vorhergehenden Ansprüche,
**dadurch gekennzeichnet,**
**dass** mindestens ein Zentrierungseinsatz zur Verschmälerung der Andockstation (5) vorgesehen ist.

15. Computergehäuse nach einem der vorhergehenden Ansprüche mit einem Laufwerk,
**dadurch gekennzeichnet,**
**dass** das Laufwerk (14) ein externes Festplattenlaufwerk mit einem Daten- und einem Stromanschluss ist.

## Claims

1. Computer housing with a docking station (5) for disk drives (14) with a data connector (12) and a power supply connector (13), whereby the docking station (5) is designed to open upward like a tub with a tub bottom (6) and a peripheral wall (7) and is arranged on the top of the computer housing, and whereby the dimensions of the docking station (5) are selected in such a way that a disk drive (14) that is to be docked can be inserted from the vertical direction from above into the docking station (5), in particular can be attached to the tub bottom (6), and can then be moved horizontally in the direction of the data connector (12) and power supply connector (13), **characterized in that** in the tub bottom (6), at least one guide groove (17) that runs in the direction of the data connector (12) and the power supply connector (13) is provided for the disk drive (14) that is to be docked.

2. Computer housing according to claim 1, wherein the docking station (5) is designed like a tub with a tub bottom (6) and a peripheral wall (7) that is preferably peripherally closed.

3. Computer housing according to claim 2, wherein the tub-shaped docking station (5) is set in an upper housing wall (4).

4. Computer housing according to one of claims 2 or 3, wherein the peripheral wall (7) of the docking station (5) has an at least approximately rectangular contour with a back wall (8), a front wall (9), and two parallel side walls (10, 11).

5. Computer housing according to claim 4, wherein at least one wall section (8, 9, 10, 11) of the peripheral wall, preferably the front wall (9), is designed as an inlet slope for the disk drive (14) where said inlet slope drops down in the direction of the tub bottom.

6. Computer housing according to one of claims 2 to 5, wherein the data connector (12) and the power supply connector (13) are arranged on the peripheral wall (7), preferably on the back wall (8).

7. Computer housing according to one of the preceding claims, wherein a power supply connector (13) that is physically separated from the data connector (12) is provided and wherein preferably the two connectors (12, 13) are arranged beside one another.

8. Computer housing according to one of claims 1 to 6, wherein a common data and power supply connector, preferably a USB connector, is provided.

9. Computer housing according to one of claims 1 to 8, wherein standard connectors that are standardized as data connectors (12) and as power supply connectors (13) are provided.

10. Computer housing according to one of the preceding claims, wherein a USB connector is provided as a data connector (12).

11. Computer housing according to one of the preceding claims, wherein a low-voltage connector is provided as a power supply connector (13).

12. Computer housing according to one of the preceding claims, wherein the docking station (5), preferably on the peripheral wall (7), has centering means (18) for the disk drive (14).

13. Computer housing according to one of the preceding claims, wherein the docking station (5) has attaching means, in particular locking means, for preferably detachable attaching of the disk drive (14).

14. Computer housing according to one of the preceding claims, wherein at least one centering insert is provided for making the docking station (5) narrower.

15. Computer housing according to one of the preceding claims with a disk drive, wherein the disk drive (14) is an external hard disk drive with a data connector and a power connector.

## Revendications

1. Boîtier d'ordinateur avec une station d'arrimage (5) pour des unités de disques (14), avec une prise réseau (12) et une prise d'alimentation électrique (13), la station d'arrimage (5) étant réalisée en forme de cuvette avec un fond de cuvette (6) et une paroi périphérique (7) ouverte vers le haut et étant disposée sur le haut du boîtier d'ordinateur, et les dimensions de la station d'arrimage (5) étant choisies de manière à pouvoir insérer une unité de disques (14) à arrimer dans la station d'arrimage (5) dans le sens vertical à partir du haut et en particulier de manière à pouvoir la poser sur le fond de cuvette (6), et de manière à pouvoir ensuite la décaler horizontalement en direction de la prise réseau (12) et de la prise d'alimentation électrique (13),
**caractérisé en ce que** l'on prévoit, dans le fond de cuvette (6), au moins une rainure de guidage (17) s'étendant en direction de la prise réseau (12) et de la prise d'alimentation électrique (13) pour l'unité de disques (14) à arrimer.

2. Boîtier d'ordinateur selon la revendication 1, **caractérisé en ce que** la station d'arrimage (5) est réalisée en forme de cuvette avec un fond de cuvette (6) et une paroi périphérique (7) de préférence fermée de manière périphérique.

3. Boîtier d'ordinateur selon la revendication 2, **caractérisé en ce que** la station d'arrimage (5) en forme de cuvette est encastrée dans une paroi supérieure du boîtier (4).

4. Boîtier d'ordinateur selon l'une des revendications 2 ou 3, **caractérisé en ce que** la paroi périphérique (7) de la station d'arrimage (5) présente un contour au moins approximativement rectangulaire avec une paroi arrière (8), une paroi avant (9) et deux parois latérales (10, 11) parallèles.

5. Boîtier d'ordinateur selon la revendication 4, **caractérisé en ce que** au moins un segment de paroi (8, 9, 10, 11) de la paroi périphérique, de préférence la paroi avant (9), est réalisée en tant qu'entrée en pente descendant en direction du fond de cuvette pour l'unité de disques (14).

6. Boîtier d'ordinateur selon l'une quelconque des revendications 2 à 5, **caractérisé en ce que** la prise réseau (12) et la prise d'alimentation électrique (13) sont disposées sur la paroi périphérique (7), de préférence sur la paroi arrière (8).

7. Boîtier d'ordinateur selon l'une des revendications précédentes, **caractérisé en ce que** l'on prévoit une prise d'alimentation électrique (13) distincte de la prise réseau (12), et **en ce que** les deux prises (12, 13) sont de préférence disposées l'une à côté de l'autre.

8. Boîtier d'ordinateur selon l'une des revendications 1 à 6, **caractérisé en ce que** l'on prévoit une prise d'alimentation électrique et réseau commune, de préférence un port USB.

9. Boîtier d'ordinateur selon l'une des revendications 1 à 8, **caractérisé en ce que** l'on prévoit des ports de connexion standard aux normes en guise de prise réseau (12) et de prise d'alimentation électrique (13).

10. Boîtier d'ordinateur selon l'une des revendications précédentes, **caractérisé en ce que** l'on prévoit un port USB en guise de prise réseau (12).

11. Boîtier d'ordinateur selon l'une des revendications précédentes, **caractérisé en ce que** l'on prévoit un point de connexion de basse-tension en tant que prise d'alimentation électrique (13).

12. Boîtier d'ordinateur selon l'une des revendications précédentes, **caractérisé en ce que** la station d'arrimage (5) présente des moyens de centrage (18) pour l'unité de disques (14) de préférence sur la paroi périphérique (7).

13. Boîtier d'ordinateur selon l'une des revendications précédentes, **caractérisé en ce que** la station d'arrimage (5) présente des moyens de fixation, en particulier des moyens d'encliquetage, pour la fixation de préférence détachable de l'unité de disques (14).

14. Boîtier d'ordinateur selon l'une des revendications précédentes, **caractérisé en ce que** l'on prévoit au moins une insertion de centrage pour rendre la station d'arrimage (5) plus mince.

15. Boîtier d'ordinateur selon l'une des revendications précédentes, avec une unité de disques, **caractérisé en ce que** l'unité de disques (14) est une unité de disque dur externe avec une prise réseau et une prise d'alimentation électrique.
